(19) Europäisches Patentamt

European Patent Office

Office européen des brevets

(11) EP 1 717 982 A2

(12) EUROPEAN PATENT APPLICATION

(43) Date of publication:
02.11.2006 Bulletin 2006/44

(51) Int Cl.:
H04L 1/00 (2006.01)　　H04L 1/08 (2006.01)

(21) Application number: 06008563.6

(22) Date of filing: 25.04.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 26.04.2005 KR 20050034772

(71) Applicant: Samsung Electronics Co., Ltd.
Suwon-si, Gyeonggi-Do (KR)

(72) Inventors:
• Heo, Young-Hyoung,c/o Samsung Elec. Co., Ltd.
Suwon-si,Gyeonggi-do (KR)

• Lee, Ju-Ho,c/o Samsung Electronics Co., Ltd.
Suwon-si,Gyeonggi-do (KR)
• Kim, Young-Bum,c/o Samsung Electronics Co., Ltd.
Suwon-si,Gyeonggi-do (KR)
• Kwak, Young-Jun,
c/o Samsung Electronics Co., Ltd.
Suwon-si,
Gyeonggi-do (KR)

(74) Representative: Grünecker, Kinkeldey,
Stockmair & Schwanhäusser
Anwaltssozietät
Maximilianstrasse 58
80538 München (DE)

(54) **Method and apparatus for determining transport parameters for physical layer to provide uplink packet data service in a mobile communication system**

(57) A method and apparatus for determining a spreading factor (SF) of a physical layer and number of bits for a physical channel in order to support a transport format combination (TFC) of an uplink dedicated channel in data transmission on the uplink dedicated channel in a mobile communication system are provided. A parameter decider selects, among available physical channel bit sizes, a bit size that minimizes bit repetition and does not require an additional physical channel. Accordingly, the hardware resources of a receiver are efficiently utilized.

FIG.2

EP 1 717 982 A2

**Description**

## BACKGROUND OF THE INVENTION

1. Field of the Invention

The present invention relates generally to mobile communications. More particularly, the present invention relates to a method and apparatus for efficiently determining transport parameters for a physical layer in order to send uplink data on an uplink channel.

2. Description of the Related Art

A third generation mobile communication system using Wideband Code Division Multiple Access (WCDMA) based on the European Global System for Mobile communications (GSM) system, Universal Mobile Telecommunication Service (UMTS) provides mobile subscribers or computer users with a uniform service of sending packet-based text, digitized voice or video, and multimedia data at or above 2Mbps irrespective of their locations around the world. With the introduction of the concept of virtual access, the UMTS system allows access to any end point within a network all the time. The virtual access refers to packet-switched access using a packet protocol like Internet Protocol (IP).

Particularly, the UMTS system uses an Enhanced Uplink Dedicated Channel (E-DCH) in order to further improve the packet transmission performance of uplink communications from a User Equipment (UE) to a Node B (or base station). The E-DCH is an improvement from a typical Dedicated Channel (DCH), aiming to support more stable, high-speed data transmission. To serve the purpose, Adaptive Modulation and Coding (AMC), Hybrid Automatic Repeat reQuest (HARQ), Node B-controlled scheduling, and shorter Transmission Time Interval (TTI) were introduced to the E-DCH transmission. The E-DCH is mapped to an Enhanced Dedicated Physical Data Channel (E-DPDCH).

AMC is a technique of determining a Modulation and Coding Scheme (MCS) adaptively according to the channel status between a Node B and a UE. Many MCS levels can be defined according to available modulation and coding schemes. The adaptive selection of an MCS level according to the channel status increases resource use efficiency.

HARQ is a packet retransmission scheme for retransmitting a packet to correct errors in an initially transmitted packet. A receiver soft-combines the initial transmission packet with the retransmission packet during decoding. HARQ is branched into Chase Combining (CC) and Incremental Redundancy (IR). In CC, a retransmission packet has the same bits as an initial transmission packet, while in IR, the bits of the retransmission packet are different from those of the initial transmission packet.

Node B-controlled scheduling is a scheme in which a Node B determines whether to permit E-DCH transmission from a UE and if it does, Node B determines an allowed maximum data rate, and transmits the determined data rate information to the UE, and the UE determines an available E-DCH data rate based on the data rate information. In order to increase use efficiency, an MCS level can be determined adaptively according to the channel status between the UE and the Node B.

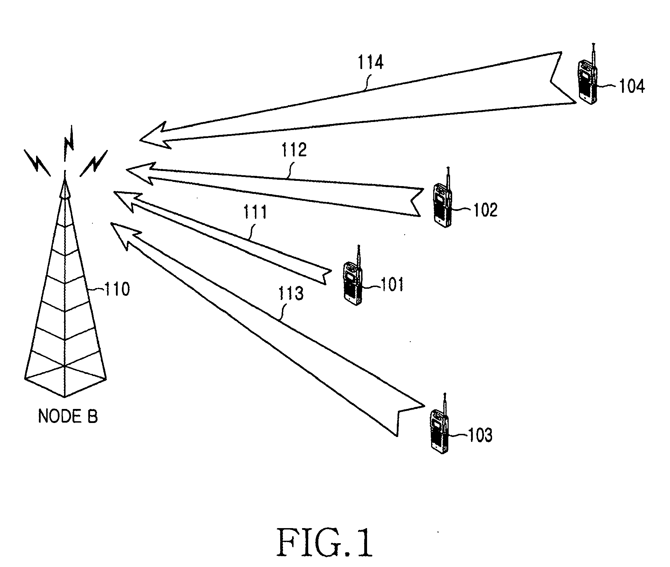

FIG. 1 conceptually illustrates uplink data transmission on the E-DCH. Reference numeral 110 denotes a Node B supporting the E-DCH and reference numerals 101 to 104 denote UEs using E-DCHs 111 to 114. The Node B 110 estimates the channel status of the UEs 101 to 104 and schedules uplink data transmission from the UEs based on the channel status. The scheduling is performed such that Rise over Thermal (RoT) at the Node B does not exceed a target RoT to increase total system performance by, for example, allocating a low data rate to a remote UE 104 and a high data rate to a nearby UE 101.

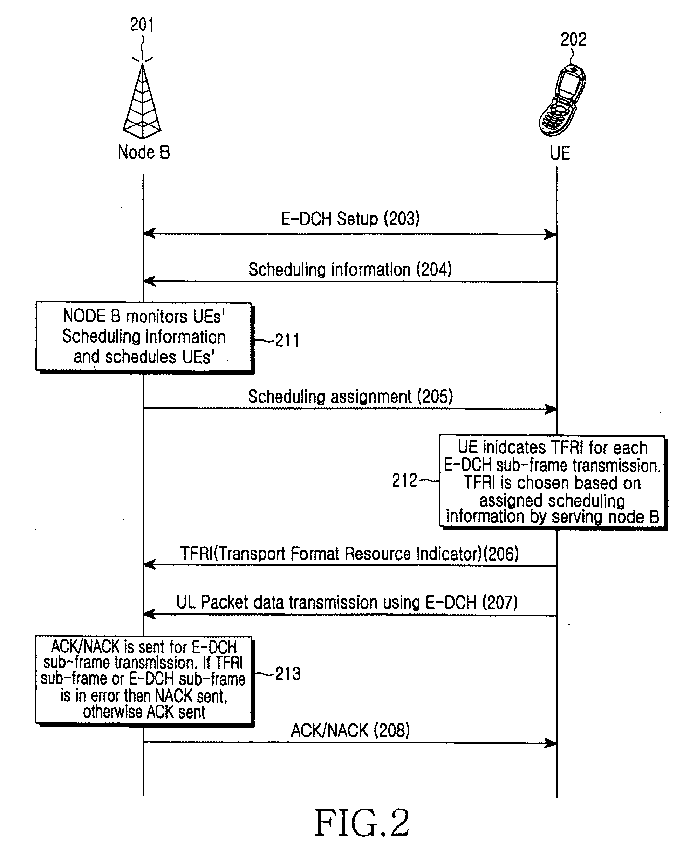

FIG. 2 is a diagram illustrating a signal flow for E-DCH transmission and reception.

Referring to FIG. 2, a Node B 201 and a UE 202 establish an E-DCH in step 203. Step 203 involves message transmission on dedicated transport channels. The UE 202 transmits its UE scheduling information indicating UE status to the Node B 201 in step 204. The UE scheduling information may contain information about the transmit power and power margin of the UE 201 representing the uplink channel status, and the amount of buffered data to be transmitted to the Node B 202.

In step 211, the Node B 201 schedules uplink packet transmission from the UE 202 by monitoring reception of the UE status information from the UE 202. That is, the Node B 201 decides to approve an uplink packet transmission from the UE 202 in step 211 and transmits scheduling assignment information to the UE in step 205. The scheduling assignment information includes an allowed data rate and an allowed timing.

In step 212, the UE 202 determines the TF of the E-DCH based on the scheduling assignment information. The UE then sends TF information and uplink packet data on the E-DCH to the Node B at the same time in steps 206 and 207. The TF information contains a Transport Format Resource Indicator (TFRI) providing information required for demodulation of the E-DCH. In step 207, the UE 202 sends the uplink data according to the allowed data rate, using an MCS level corresponding to the channel status.

The Node B determines whether the TFRI and the uplink packet data have errors in step 213. In the presence of errors in either of the TFRI and the uplink packet data, the Node B transmits a Non-ACKnowledgement (NACK) signal to the UE, whereas in the absence of errors in both, the Node B transmits an ACKnowledgement (ACK) signal to the UE. In the latter case, the packet data transmission is completed and the UE transmits new packet data to the Node B 201 on the E-DCH. On the other hand, in the former case, the UE 202 retransmits the same packet data to the Node B 201 on the E-DCH.

Under the above environment, the UE calculates the Spreading Factor (SF) and number of physical channels on a TTI basis when sending the E-DCH. A Transport Format Combination (TFC) can be changed for every TTI on the uplink and thus it is regulated that an optimal SF and an optimal number of physical channels be calculated. A data size for physical channels is determined by the SF and number of the physical channels. If the data size is much less than a data size corresponding to the TFC, too many bits are punctured in the physical layer, thereby decreasing transmission quality. On the contrary, if a too large data size is selected for the physical channels, unnecessary repetitions take place and too many physical channels are used. The resulting increase of Peak-to-Average-Power Ratio (PAPR) reduces the coverage of the UE.

The SF and number of physical channels are calculated according to TFs as follows.

Let the total number of bits in a transport block before rate matching with TFC j is denoted by $N_{e,j}$. Then the total number of bits available for transmission of as much E-DCH data as $N_{e,j}$ on a physical channel, $N_{e,data,j}$ is determined by executing the following algorithm.

A Puncturing Limit (PL) is the maximum amount of puncturing which can be applied to data before rate matching. The PL is $PL_{non-max}$ when the number of code channels and an SF corresponding to a physical channel data size are less than the maximum number of code channels and SF allowed by the UE capacity and restrictions imposed by a system. The PL is $PL_{max}$ when the number of code channels corresponding to the physical channel data size is equal to the maximum allowed by the UE capability and restrictions imposed by the system. $PL_{non-max}$ is signaled from a higher layer, and $PL_{max}$ is fixed, for example, to 0.44 or 0.33.

The number of available bits per TTI of one physical channel for all possible SFs is denoted by $N_{64}$, $N_{32}$, $N_{16}$, $N_8$, $N_4$, and $N_2$, where the subscripts refer to the SFs.

$N_{e,data}$ denotes the possible number of bits available to a Coded Composite Transport CHannel (CCTrCH) of E-DCH type on all physical channels. $N_{e,data}$ then is $\{N_{64}, N_{32}, N_{16}, N_8, N_4, 2N_4, 2N_2, 2N_2+2N_4\}$.

SET0 denotes the set of $N_{e,data}$ values allowed by the system and supported by the UE. SET0 can be a subset of $\{N_{64}, N_{32}, N_{16}, N_8, N_4, 2N_4, 2N_2, 2N_2+2N_4\}$. Numbers 1 or 2 multiplied by the bit numbers denotes the number of physical channels.

Taking into account the above considerations, the algorithm of determining $N_{e,data,j}$ is expressed as:

$$\text{SET1} = \{ \; N_{e,data} \text{ in SET0 such that } N_{e,data} - N_{e,j} \text{ is non negative} \; \}$$

If SET1 is not empty and the smallest element of SET1 requires just one E-DPDCH

then

$$N_{e,data,j} = \min \text{SET1}$$

Else

$$\text{SET2} = \{ \; N_{e,data} \text{ in SET0 such that } N_{e,data} - PL_{non-max} * N_{e,j} \text{ is non negative} \; \}$$

If SET2 is not empty then

   Sort SET2 in ascending order

$$N_{e,data} = \min \text{SET2}$$

While $N_{e,data}$ is not the max of SET2 and the follower of $N_{e,data}$ requires no additional E-DPDCH do

$$N_{e,data} = \text{follower of } N_{e,data} \text{ in SET2}$$

End while

$$N_{e,data,j} = N_{e,data}$$

Else

$$N_{e,data,j} = \text{max SET0 provided that } N_{e,data,j} - PL_{max} * N_{e,j} \text{ is non negative}$$

End if

End if
   . . . . . (1)

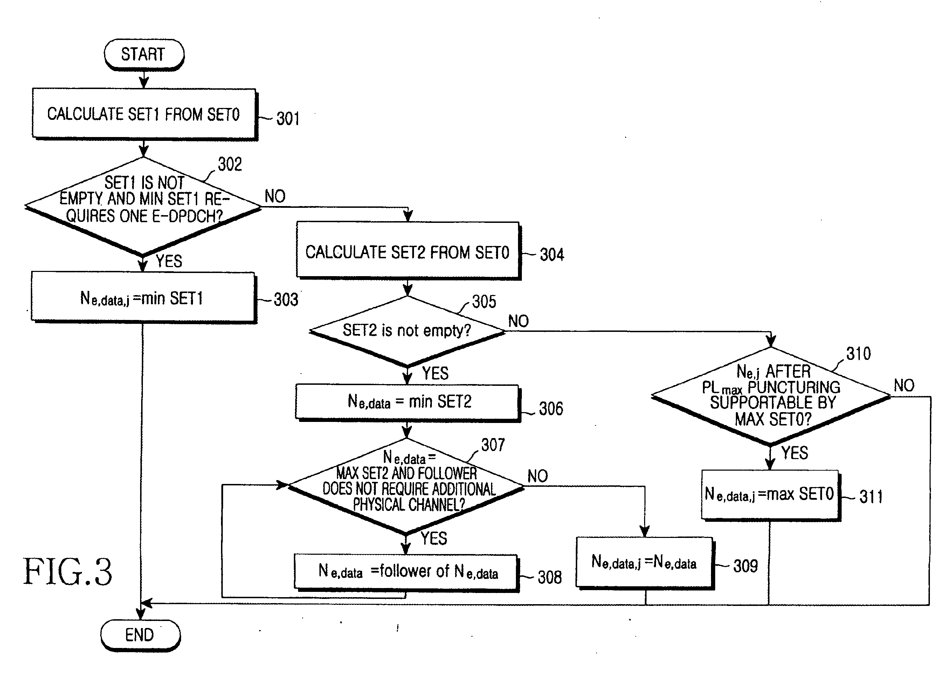

Equation (1) will be described with reference to FIG. 3. While equation (1) is described as an operation for determining transport parameters for E-DCH transmission from the UE, the same equation is applied to the determination of reception parameters for E-DCH reception in the Node B.

Referring to FIG. 3, the UE calculates a set of elements supporting $N_{e,j}$ without puncturing from SET0 in step 301. This set is denoted by SET1. In step 302, the UE determines whether SET1 is not empty and the smallest element of SET1 (min SET1) requires one Enhanced-Dedicated Physical Data CHannel (E-DPDCH) in step 303. If the answer is positive, the UE determines $N_{e,data,j}$ to be min SET1. For example, if SET0={120, 240, 480, 960, 1920, 3840, 7680, 11520} for a 2-ms TTI and $N_{e,j}$=900 bits, SET1={$N_8$, $N_4$, $2N_4$, $2N_2$, $2N_2+2N_4$}. In min SET1, $N_8$ requires one physical channel. Thus, $N_{e,data,j}$=N8. N8 is the number of bits for one physical channel.

If the answer is negative in step 302, the UE constructs SET2 having elements available with puncturing by comparing $N_{e,data}$ with $N_{e,j} \times PL_{non-max}$ to select $N_{e,data}$ that can support $N_{e,j}$ in step 304. SET2 includes elements that can be accommodated after the transport channel data bit size of the E-DCH is reduced by puncturing for rate matching. The reason for including elements requiring puncturing instead of elements requiring a plurality of physical channels is that puncturing is relatively efficient rather than plural physical channels that are used with the PAPR problem.

If SET2 is determined, the UE determines whether SET2 is empty in step 305. If SET2 is not empty, the UE sets $N_{e,data}$ to the smallest element of SET2, min SET2 in step 306. In step 307, the UE determine whether $N_{e,data}$ is not the maximum element of SET2, max SET2 and the follower requires no additional physical channels. If $N_{e,data}$ is not the maximum element of SET2, max SET2 and the follower requires no additional physical channels, the UE finally sets $N_{e,data}$ to the follower in step 308. If the answer is negative in step 307, the UE sets $N_{e,data}$ to $N_{e,data,j}$ in step 309.

For instance, for $N_{e,j}$=3000, SET1={$2N_4$, $2N_2$, $2N_2+2N_4$}. Since min SET1, $2N_4$ requires two physical channels, and SET2 is calculated. SET2 includes $N_{e,data}$ less than the product of $PL_{non-max}$ and $N_{e,j}$. If $PL_{non-max}$= 0.5, SET2={$N_4$, $2N_4$, $2N_2$, $2N_2+2N_4$}. The follower of the maximum element, requiring no additional E-DPDCH is selected as the number of bits for a physical channel to deliver a transport block with TFC j, $N_{e,data,j}$. In the above example, $N_4$ is selected.

If SET2 is empty in step 305, the UE applies $PL_{max}$ to max SET0 and determines whether any $N_{e,data}$ exists, which is less than $N_{e,j} \times PL_{max}$ in step 310. In the presence of such $N_{e,data}$, the UE determines $N_{e,data,j}$ to be max SET0 in step 311. Since the E-DCH supports HARQ, a large number of bits can be sent on a physical channel despite a very high puncturing level.

For SET0 in a 2-ms TTI, the conventional technology has the following problem.

If $N_{e,j}$=3700, SET1={$2N_4$, $2N_2$, $2N_2+2N_4$} in step 301. Since none of the elements in SET1 require one physical channel, SET2 is calculated in step 304. For $PL_{non-max}$=0.6, SET={$2N_4$, $2N_2$, $2N_2+2N_4$}. The UE then selects the maximum element requiring no additional physical channel as the number of bits for a physical channel, starting from the smallest element of SET2. Both the smallest element, $2N_4$ and the follower $2N_2$ require two physical channels. Thus, $2N_2$ is set as $N_{e,data}$ in step 308. The follower of $2N_2$, $2N_2+2N_4$ also requires an additional physical channel and thus $N_{e,data,j}$ is $2N_2$ in step 309.

That is, $N_{e,data,j}$ is set to $2N_2$ (=7680) to send $N_{e,j}$=3700. In a comparison between $2N_4$ and $2N_2$, 140 bits (=3840-3700) are repeated in the case of $2N_4$ and 3980 bits (=7680-3700) are repeated in the case of $2N_2$. Repetition does not affect transmission quality at an appropriate power level. However, excess repetition increases the number of bits to be processed at a receiver, thereby increasing memory consumption in hardware and processing time.

Accordingly, there is a need for an improved method and apparatus for determining transport parameters for a physical layer without access bit repetition.

## SUMMARY OF THE INVENTION

An aspect of exemplary embodiments of the present invention is to address the above problems and/or disadvantages and to provide at least the advantages described below. Accordingly, an aspect of exemplary embodiments of the present invention is to provide a method and apparatus for calculating an SF and the number of physical channels supported for each TFC, when data is sent on an uplink dedicated channel in a mobile communication system.

The present invention provides a method and apparatus for efficiently using the hardware resources of a receiver in calculating an SF and the number of physical channels supportable for an uplink dedicated channel.

According to one aspect of exemplary embodiments of the present invention, in a method of determining transport parameters for a physical channel to provide an uplink packet data service in a mobile communication system, a minimum physical channel bit size (min SET1) supporting transmission of packet data without puncturing is selected from a first set (SET0) including available physical channel bit sizes ($N_{e,data}$), taking into account the bit size of the packet data ($N_{e,j}$). In the absence of any physical channel bit size supporting transmission of the packet data without puncturing, a second set (SET2) is selected from the first set by applying a predetermined puncturing limit ($PL_{non-max}$). The second set includes at least one physical channel bit size supporting transmission of the packet data. A physical channel bit size that minimizes bit repetition is selected from the second set. The packet data is transmitted or received using the selected physical channel bit size.

According to another aspect of exemplary embodiments of the present invention, an apparatus for determining transport parameters for a physical channel to provide an uplink packet data service in a mobile communication system includes a parameter decider for determining a physical channel bit size for packet data and an SF and number of physical channels corresponding to the physical channel bit size according to the bit size of the packet data ($N_{e,j}$). A physical layer device transmits or receives the packet data according to the SF and the number of physical channels. The parameter decider selects a minimum physical channel bit size (min SET1) supporting transmission of the packet data without puncturing from a first set (SET0) including available physical channel bit sizes ($N_{e,data}$), taking into account the bit size of the packet data ($N_{e,j}$), selects a second set (SET2) from the first set by applying a predetermined puncturing limit ($PL_{non-max}$), in the absence of any physical channel bit size supporting transmission of the packet data without puncturing, the second set including at least one physical channel bit size supporting transmission of the packet data, and selects a physical channel bit size that minimizes bit repetition from the second set.

Other objects, advantages, and salient features of the invention will become apparent to those skilled in the art from the following detailed description, which, taken in conjunction with the annexed drawings, discloses exemplary embodiments of the invention.

## BRIEF DESCRIPTION OF THE DRAWINGS

The above and other objects, features and advantages of certain exemplary embodiments of the present invention will become more apparent from the following detailed description taken in conjunction with the accompanying drawings, in which:

FIG. 1 conceptually illustrates a conventional transmission of uplink data;

FIG. 2 is a diagram illustrating a signal flow for uplink data transmission;

FIG. 3 is a flowchart illustrating a conventional operation for determining an SF and the number of physical channels for each TFC;

FIG. 4 is a flowchart illustrating an operation for determining the number of physical channels according to an SF, according to an exemplary embodiment of the present invention;

FIG. 5 is a flowchart illustrating an operation for determining an SF and the number of physical channels for each TFC, according to an exemplary embodiment of the present invention;

FIG. 6 is a block diagram of an apparatus for determining transport parameters according to a TFC, according to an exemplary embodiment of the present invention;

FIG. 7 is a block diagram of a transmitter in a UE, for determining transport parameters according to an exemplary embodiment of the present invention; and

FIG. 8 is a block diagram of a receiver in a Node B, for determining transport parameters according to an exemplary embodiment of the present invention.

Throughout the drawings, the same drawing reference numerals will be understood to refer to the same elements, features, and structures.

## DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The present invention is directed to a determination of the SF and number of physical channels needed to send uplink data, for each TFC. The following description will be made in the context of UMTS using asynchronous WCDMA, to which the present invention is not limited.

In accordance with exemplary embodiments of the present invention, when determining the number of bits for a physical channel with TFC j, $N_{e,data,j}$ to send data having $N_{e,j}$ bits before rate matching, a bit size having the SF and number of physical channels, which minimizes the use of hardware resources in a receiver, is selected among available bit sizes. While the following description is applied commonly to a UE that sends the E-DCH and a Node B that receives the E-DCH, the following description is made in the context of the UE for notational simplicity.

In the conventional technology, when the number of bits with TFC j, $N_{e,j}$ is punctured at $PL_{non-max}$ and $N_{e,j}$x $PL_{non-max}$ is sent, bit sizes of SF4 or below are not available for physical channels. If a UE can support elements of SF4x2 or above, the UE cannot select SF4x2. As stated before, both SF4x2 and SF2x2 require bit repetition, which does not contribute to improvement of transmission quality. Nonetheless, SF2x2 which is rather excessive is selected.

Therefore, where both SF4x2 and SF2x2 are available for transmission of $N_{e,j}$, SF4x2 is allowed for some TFCs in the exemplary embodiments of the present invention.

For a plurality of physical channels, puncturing is applied up to a puncturing limit and then a bit size is selected for the physical channels. To serve this purpose, the number of physical channels for each SF in the elements of SET0 representing all possible bit sizes for physical channels is re-defined.

Conventionally, for SET2={SF4x2, SF2x2, SF2x2+SF4x2}, both SF4x2 and SF2x2 require two E-DPDCHs. Thus, SF2x2 is always selected. From a viewpoint of a bit size for physical channels, one physical channel with SF2 is equivalent to two physical channels with SF4. In this context, SF2 is assumed to be two SF4s and the number of physical channels associated with SF2 is re-defined in an exemplary embodiment of the present invention.

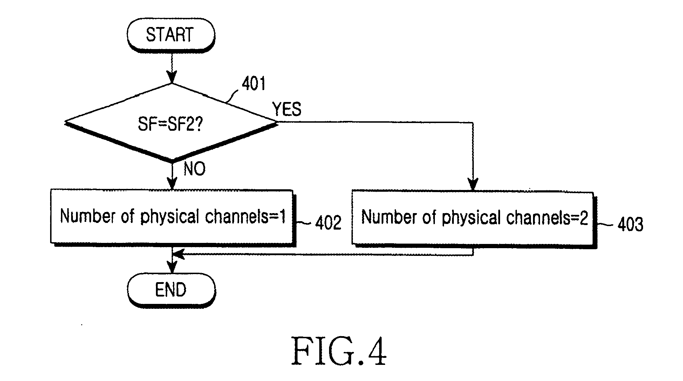

FIG. 4 is a flowchart illustrating an operation for determining transport parameters for physical channels according to an exemplary embodiment of the present invention.

Referring to FIG. 4, the UE detects bit sizes with SF2 from a set of bit sizes available for physical channels, SET0 in step 401. In step 403, the UE considers that the number of equivalent physical channels is 2 for a physical channel bit size with SF2. In step 402, the UE sets the number of equivalent physical channels to 1 for a physical channel bit size with an SF other than SF2.

For each element of SET0, the number of equivalent physical channels is set as follows.

(Table 1)

| element | Number of equivalent physical channels |
|---|---|
| N | 1 |
| $N_{32}$ | 1 |
| $N_{16}$ | 1 |
| $N_8$ | 1 |
| $N_4$ | 1 |
| $2N_4$ | 2*1 = 2 |
| $2N_2$ | 2*2 = 4 |
| $2N_2 + 2N_4$ | 2*2 + 2*1 = 6 |

As the number of physical channels for a bit size with SF=2 is doubled, the SF and number of physical channels are determined in the following manner. If $N_{e,j}$x$PL_{non-max}$=3700x0.6=2200, SET2={$2N_4$, $2N_2$, $2N_2$+$2N_4$}. The UE then checks the minimum element of SET2, $2N_4$ in step 307 of FIG. 3. $2N_4$ is not the maximum elements of SET2 and its follower, $2N_2$ needs four physical channels, that is, additional E-DPDCHs. Therefore, for $N_{e,j}$=3700, $2N_4$ (that is, SF=4) is selected as $N_{e,data,j}$ in step 309. As far as $N_{e,j}$x$PL_{non-max}$ is equal to or less than $2N_4$, the UE can select $2N_4$.

When the number of equivalent physical channels is decided as described above, transport parameters are determined in the same manner as the procedure of FIG. 3, except that the following new definition of the number of physical channels is added to equation (1).

SET1 = { $N_{e,data}$ in SET0 such that $N_{e,data}$ - $N_{e,j}$ is non negative }

If SET1 is not empty and the smallest element of SET1 requires just one E-DPDCH

then

$N_{e,data,j}$ = min SET1

Else

SET2 = { $N_{e,data}$ in SET0 such that $N_{e,data}$ - $PL_{non-max}$ * $N_{e,j}$ is non negative }

If SET2 is not empty then

Sort SET2 in ascending order

$N_{e,data}$ = min SET2

While $N_{e,data}$ is not the max of SET2 and the follower of $N_{e,data}$ requires no additional <u>equivalent</u> E-DPDCH do

$N_{e,data}$ = follower of $N_{e,data}$ in SET2

End while

$N_{e,data,j}$ = $N_{e,data}$

Else

$N_{e,data,j}$ = max SET0 provided that $N_{e,data,j}$ - $PL_{max}$ * $N_{e,j}$ is non negative

End if

End if $\qquad \ldots \ldots (2)$

A PL is used in equation (2), which represents the maximum amount of puncturing which can be applied to data before rate matching. The PL is $PL_{non-max}$ when the number of code channels and an SF corresponding to a physical channel data size are less than the maximum number of code channels and SF allowed by the UE capacity and restrictions imposed by a system. The PL is $PL_{max}$ when the number of code channels corresponding to the physical channel data size is equal to the maximum allowed by the UE capability and restrictions imposed by the system. $PL_{non-max}$ is signaled from a higher layer, and $PL_{max}$ is fixed, for example, to 0.44 or 0.33.

The number of available bits per TTI of one physical channel for all possible SFs is denoted by $N_{64}$, $N_{32}$, $N_{16}$, $N_8$, $N_4$, and $N_2$, where the subscripts refer to the SFs.

$N_{e,data}$ denotes the possible number of bits available to a Coded Composite Transport CHannel (CCTrCH) of an E-DCH type on all physical channels. $N_{e,data}$ then is { $N_{64}$, $N_{32}$, $N_{16}$, $N_8$, $N_4$, $2N_4$, $2N_2$, $2N_2+2N_4$}.

SET0 denotes the set of $N_{e,data}$ values allowed by the system and supported by the UE. SET0 can be a subset of {$N_{64}$, $N_{32}$, $N_{16}$, $N_8$, $N_4$, $2N_4$, $2N_2$, $2N_2+2N_4$}.

When bit repetition takes place for a plurality of physical channels, the minimum element is selected.

The problem encountered with the conventional technology is that the hardware resource consumption of a receiver is increased if bit repetition is needed in both SF4x2 and SF2x2. To solve this problem, SF4x2 is selected when bit repetition occurs. That is, if bit repetition is needed for an element of SET2, even though SET is obtained using $PL_{non-max}$, the element is selected as a bit size for physical channels. It can be determines whether the elements requires bit repetition by

$$N_{e,data}-N_{e,j}<0 \qquad \ldots \ldots (3)$$

If the above equation is fulfilled, no bit repetition takes place. Otherwise, bit repetition occurs. In the former case, some bits can be punctured.

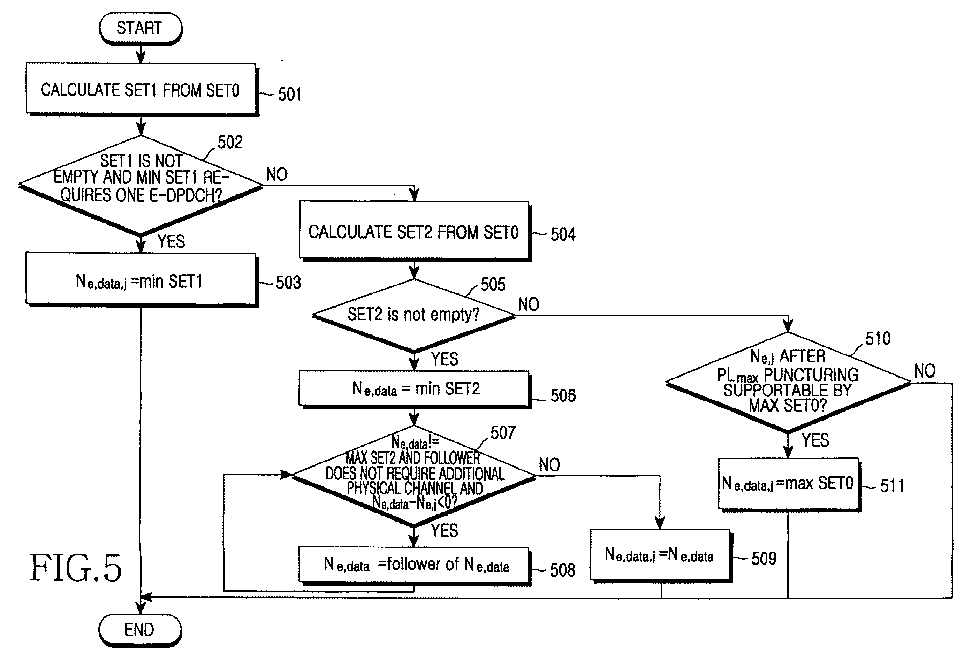

FIG. 5 is a flowchart illustrating an operation for determining the bit size, SF and a number of physical channels according to an exemplary embodiment of the present invention.

Referring to FIG. 5, the UE calculates the set of elements supporting $N_{e,j}$ without puncturing from SET0 in step 501. The set is denoted by SET1. In step 502, the UE determines whether SET1 is not empty and the smallest element of SET1 (min SET1) requires one E-DPDCH. If the answer is positive, the UE determines $N_{e,data,j}$ to be min SET1 in step 503. If the answer is negative in step 502, the UE proceeds to step 504.

The UE constructs SET2 having elements supporting $N_{e,j}$ with puncturing in step 504. These elements are $N_{e,data}$ equal to or greater than $N_{e,j} \times PL_{non-max}$. If SET2 is determined, the UE determines whether SET2 is empty in step 505. If SET2 is not empty, the UE sets $N_{e,data}$ to the smallest element of SET2, min SET2 in step 506.

In step 507, the UE determine whether $N_{e,data}$ is not the maximum element of SET2, max SET2 and the follower requires no additional physical channels, and whether $N_{e,data}$ requires bit repetition. If the answer is positive in step 507, the UE sets $N_{e,data}$ to the follower in step508. If the answer is negative in step 507, which implies that $N_{e,data}$ is max SET2, the follower requires an additional physical channel, or bit repetition occurs for $N_{e,data}$, the UE sets $N_{e,data}$ to $N_{e,data,j}$ in step 509. That is, in steps 506 to 509, a maximum element that does not require an additional physical channel and minimizes bit repetition among the elements of SET2 is selected as $N_{e,data,j}$.

If SET2 is empty in step 505, the UE applies $PL_{max}$ to max SET0 and determines whether any $N_{e,data}$ exists, which is less than $N_{e,j} \times PL_{max}$ in step 510. In the presence of such $N_{e,data}$, the UE determines $N_{e,data,j}$ to be max SET0 in step 511. Since the E-DCH supports HARQ, a large number of bits can be sent on a physical channel despite a very high puncturing level.

In accordance with an exemplary embodiment of the present invention, the SF and number of physical channels are decided as follows. If $N_{e,j} \times PL_{non-max}=3700 \times 0.6=2200$, SET2=$\{2N_4, 2N_2, 2N_2+2N_4\}$. The UE then starts with $2N_4$ in step 507. Element 2xSF4 is not the maximum element of SET2 and its follower, $2N_2$ needs no additional E-DPDCHs. However, bit repetition occurs since $N_{e,data}(=3840)-N_{e,j}(=3700)>0$. Therefore, $N_{e,data,j}=2N_4$ in step 509. That is, the UE selects $2N_4$ for $N_{e,j}=3700$.

The following algorithm is for the operation for determining bit size, SF and the number of physical channels according to an exemplary embodiment of the present invention.

$$\text{SET1} = \{ N_{e,data} \text{ in SET0 such that } N_{e,data} - N_{e,j} \text{ is non negative} \}$$

If SET1 is not empty and the smallest element of SET1 requires just one E-DPDCH

then

$$N_{e,data,j} = \min \text{SET1}$$

Else

$$\text{SET2} = \{ N_{e,data} \text{ in SET0 such that } N_{e,data} - PL_{non-max} * N_{e,j} \text{ is non negative} \}$$

If SET2 is not empty then

Sort SET2 in ascending order

$$N_{e,data} = \min \text{SET2}$$

While $N_{e,data} - N_{e,j}$ is negative and $N_{e,data}$ is not the max of SET2 and the follower of $N_{e,data}$ requires no additional E-DPDCH do

$$N_{e,data} = \text{follower of } N_{e,data} \text{ in SET2}$$

End while

$$N_{e,data,j} = N_{e,data}$$

Else

$$N_{e,data,j} = \max \text{SET0 provided that } N_{e,data,j} - PL_{max} * N_{e,j} \text{ is non negative}$$

End if

End if                                                                                     . . . . . (4)

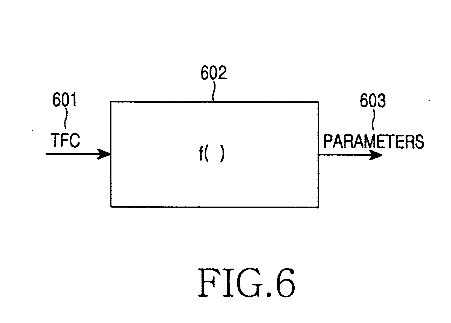

FIG. 6 is a block diagram of an apparatus for determining transport parameters according to a TFC, according to an exemplary embodiment of the present invention.

Referring to FIG. 6, a decider 602 receives a TFC 601 selected for a current TTI and determines transport parameters for the number of bits before rate matching corresponding to the TFC 601, for example, the number of bits for a physical channel, and the SF and number of physical channels corresponding to the physical channel bit size by a formula f(). In an exemplary implementation, j denotes the index of the TFC 601, and the physical channel bit size is determined according to an exemplary embodiment of the present invention as described above, alone or both.

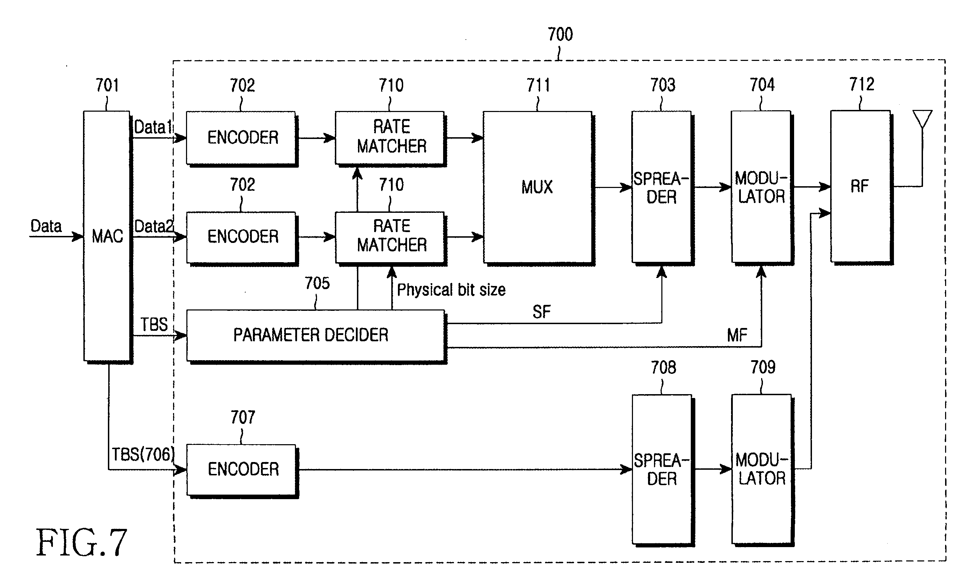

FIG. 7 is a block diagram of a transmitter in a UE, for determining transport parameters according to an exemplary embodiment of the present invention. While the transmitter is configured to use two transport channels, the transmitter can be used for two or more transport channels.

Referring to FIG. 7, a Medium Access Control (MAC) layer processor 701 determines a TFC for E-DCH transmission and creates data blocks according to the TFC. The TFC represents the size and number of data blocks which are determined to satisfy an available power level and channel status of the UE within a maximum allowed data rate set by a Node B. The data size of a transport channel, that is, a Transport Block Size (TBS) is determined according to the product of the size and number of the data blocks.

The TBS is provided in the form of an internal primitive to a parameter decider 705 in a physical layer 700. The parameter decider 705 determines a Modulation Factor (MF) using the TBS and a known PL according to the above exemplary embodiments. The MF represents a physical channel bit size suitable for the E-DCH, and an associated SF and modulation scheme. The parameters are provided to a spreader 703, modulator 704, and rate matchers 710.

The data blocks Data1 and Data 2 created by the MAC layer processor 701 are encoded on a transport channel basis by encoders 702 and provided to a Multiplexer (MUX) 711 via the rate matchers 710. The rate matchers 710 rate-matches the data blocks according to the physical channel bit size (that is, puncturing). The MUX 711 multiplexes the rate-matched transport channel data. The multiplexed data is of the physical channel bit size. The spreader 703 spreads the multiplexed data using the SF determined by the parameter decider 716. The spread data is modulated in the modulator 704.

Meanwhile, control information including a TBS 706 is sent to Node B via an encoder 707, spreader 708, and modulator 709 in a control channel transmission path. A Radio Frequency (RF) processor 712 converts the E-DCH data received from the modulator 704 and the control information received from the modulator 709 to an RF signal and sends the RF signal to Node B through an antenna.

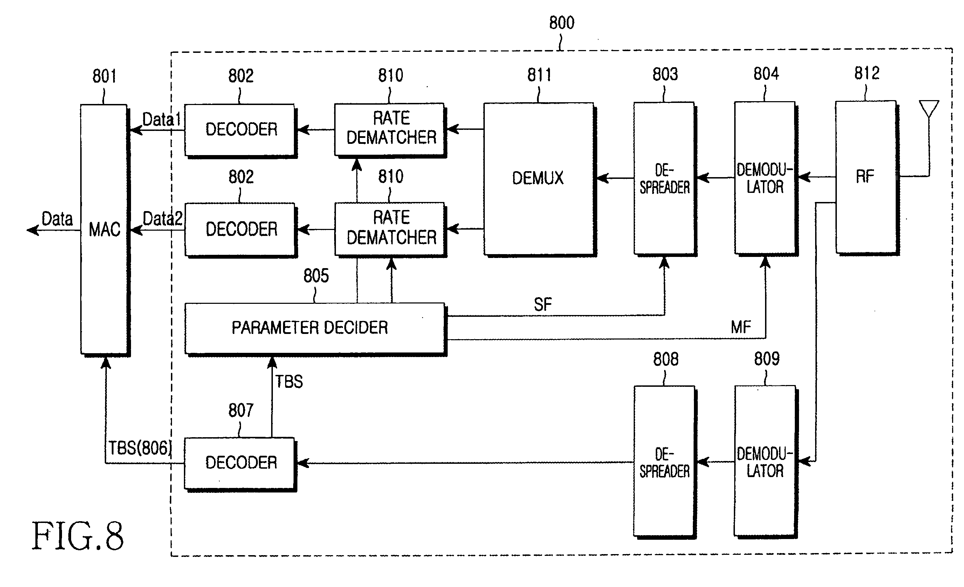

FIG. 8 is a block diagram of a receiver in Node B, for determining transport parameters according to an exemplary embodiment of the present invention.

Referring to FIG. 8, in a physical layer 800 of Node B, an RF processor 812 converts an RF signal received from a UE through an antenna to a baseband signal and provides the baseband signal to demodulators 804 and 809. The baseband signal includes E-DCH data and control information.

For processing the control information, the demodulator 809 demodulates the received signal and a despreader 808 extracts a control signal by despreading the demodulated signal with the channelization code of a control channel. A decoder 807 recovers the control information by decoding the control signal and provides it to a MAC layer processor 801. The control information includes the TBS 806 of the E-DCH data. The decoder 807 provides the TBS 806 to a parameter decider 805. The parameter decider 805 determines transport parameters of the E-DCH physical layer, that is, the SF, MF and number of physical channels according to exemplary embodiments of the present invention and provides the transport parameters to a despreader 803 and the demodulator 804.

Meanwhile, the demodulator 804 demodulates the received signal and a despreader 803 extracts physical channel data by despreading the demodulated signal with a channelization code according to the SF determined by the parameter decider 805. The physical channel data is demultiplexed on a transport channel basis in a demultiplexer (DEMUX) 811 and provided to decoders 802 through rate dematchers 810. The decoders 802 decode transport channel data received from the rate dematchers 810. The MAC layer processor 801 sends the decoded data to a higher layer.

In accordance with exemplary embodiments of the present invention as described above, the SF and number of physical channels are determined on a TFC basis, for E-DCH transmission, such that the hardware resources of Node B are efficiently used.

While the invention has been shown and described with reference to certain exemplary embodiments thereof, it will be understood by those skilled in the art that various changes in form and details may be made therein without departing from the spirit and scope of the invention as defined by the appended claims.

**Claims**

1. A method of determining transport parameters for a physical channel to provide an uplink packet data service in a mobile communication system, the method comprising:

    selecting a minimum physical channel bit size (min SET1) supporting transmission of packet data without puncturing from a first set (SET0) comprising available physical channel bit sizes ($N_{e,data}$), taking into account the bit size of the packet data ($N_{e,j}$);
    selecting a second set (SET2) from the first set by applying a puncturing limit ($PL_{non-max}$), in the absence of any physical channel bit size supporting transmission of the packet data without puncturing, the second set comprising at least one physical channel bit size supporting transmission of the packet data;
    selecting a physical channel bit size that minimizes bit repetition from the second set; and
    at least one of transmitting and receiving the packet data using the selected physical channel bit size.

2. The method of claim 1, wherein the at least one of transmitting and receiving of the packet data is performed on an enhanced-uplink dedicated channel (E-DCH) in an asynchronous wideband code division multiple access (WCDMA) system.

3. The method of claim 1, wherein the physical channel bit sizes corresponds to a combination of a spreading factor (SF) and number of physical channels.

4. The method of claim 1, wherein the bit size of the packet data is a bit size before rate matching corresponding to a transport format combination (TFC) used for the packet data.

5. The method of claim 1, wherein the physical channel bit size that minimizes bit repetition is a maximum bit size that minimizes bit repetition and requires no additional physical channel in the second set.

6. The method of claim 5, wherein the selecting of the physical channel bit size comprises:

    setting one element of the second set as $N_{e,data}$;
    determining whether the condition that $N_{e,data}$ is less than the bit size of the packet data, $N_{e,data}$ is a maximum element of the second set, and a follower of $N_{e,data}$ does not require an additional physical channel is satisfied;
    selecting the follower of $N_{e,data}$ for use in transmission or reception of the packet data, if the condition is satisfied; and
    changing $N_{e,data}$ in the second set and determining whether the condition is satisfied for the changed $N_{e,data}$.

7. An apparatus for determining transport parameters for a physical channel to provide an uplink packet data service in a mobile communication system, the apparatus comprising:

    a parameter decider for determining a physical channel bit size for packet data, and a spreading factor (SF) and the number of physical channels corresponding to the physical channel bit size according to the bit size of the packet data ($N_{e,j}$); and
    a physical layer device for at least one of transmitting and receiving the packet data according to the SF and the number of physical channels,
    wherein the parameter decider selects a minimum physical channel bit size (min SET1) supporting transmission of the packet data without puncturing from a first set (SET0) comprising available physical channel bit sizes ($N_{e,data}$), taking into account the bit size of the packet data ($N_{e,j}$), selects a second set (SET2) from the first set by applying a puncturing limit ($PL_{non-max}$), in the absence of any physical channel bit size supporting transmission of the packet data without puncturing, the second set comprising at least one physical channel bit size supporting transmission of the packet data, and selects a physical channel bit size that minimizes bit repetition from the second set.

8. The apparatus of claim 7, wherein the physical layer device transmits and receives the packet data on an enhanced-uplink dedicated channel (E-DCH) in an asynchronous wideband code division multiple access (WCDMA) system.

9. The apparatus of claim 7, wherein the physical channel bit sizes corresponds to a combination of an SF and the number of physical channels.

10. The apparatus of claim 7, wherein the bit size of the packet data is a bit size before rate matching corresponding to a transport format combination (TFC) used for the packet data.

11. The apparatus of claim 7, wherein the physical channel bit size that minimizes bit repetition is a maximum bit size that minimizes bit repetition and does not require an additional physical channel in the second set.

12. The apparatus of claim 11, wherein the parameter decider sets one element of the second set as $N_{e,data}$; determines whether the condition that $N_{e,data}$ is less than the bit size of the packet data, $N_{e,data}$ is a maximum element of the second set, and a follower of $N_{e,data}$ does not require an additional physical channel is satisfied; selects the follower of $N_{e,data}$ for use in at least one of transmission and reception of the packet data, if the condition is satisfied; and changes $N_{e,data}$ in the second set and determines whether the condition is satisfied for the changed $N_{e,data}$.

FIG.1

201

Node B

202

UE

E-DCH Setup (203)

Scheduling information (204)

NODE B monitors UEs'
Scheduling information
and schedules UEs' —211

Scheduling assignment (205)

UE inidcates TFRI for each
E-DCH sub-frame transmission.
212— TFRI is chosen based on
assigned scheduling
information by serving node B

TFRI(Transport Format Resource Indicator)(206)

UL Packet data transmission using E-DCH (207)

ACK/NACK is sent for E-DCH
sub-frame transmission. If TFRI
sub-frame or E-DCH sub-frame —213
is in error then NACK sent,
otherwise ACK sent

ACK/NACK (208)

FIG.2

EP 1 717 982 A2

START

CALCULATE SET1 FROM SET0 — 301

SET1 IS NOT EMPTY AND MIN SET1 REQUIRES ONE E-DPDCH? — 302

NO →

YES ↓

$N_{e,data,j}$ =min SET1 — 303

CALCULATE SET2 FROM SET0 — 304

SET2 is not empty? — 305

NO →

YES ↓

$N_{e,data}$ = min SET2 — 306

$N_{e,data}$ = MAX SET2 AND FOLLOWER DOES NOT REQUIRE ADDITIONAL PHYSICAL CHANNEL? — 307

NO →

YES ↓

$N_{e,data}$ =follower of $N_{e,data}$ — 308

$N_{e,data,j}$ =$N_{e,data}$ — 309

$N_{e,j}$ AFTER $PL_{max}$ PUNCTURING SUPPORTABLE BY MAX SET0? — 310

NO →

YES ↓

$N_{e,data,j}$ =max SET0 — 311

FIG.3

END

START

401

SF=SF2?          YES

NO

| Number of physical channels=1 | ~402 |
| Number of physical channels=2 | ~403 |

END

FIG.4

START

CALCULATE SET1 FROM SET0 — 501

502 — SET1 IS NOT EMPTY AND MIN SET1 RE- QUIRES ONE E-DPDCH?

NO → CALCULATE SET2 FROM SET0 — 504

505 — SET2 is not empty?

NO → 510 — $N_{e,j}$ AFTER PL_max PUNCTURING SUPPORTABLE BY MAX SET0?

NO →

YES → $N_{e,data,j}$ =max SET0 — 511

YES (505) → $N_{e,data}$ = min SET2 — 506

507 — $N_{e,data}$ != MAX SET2 AND FOLLOWER DOES NOT REQUIRE ADDITIONAL PHYSICAL CHANNEL AND $N_{e,data}-N_{e,j}$<0?

NO → $N_{e,data,j}$ =$N_{e,data}$ — 509

YES → $N_{e,data}$ =follower of $N_{e,data}$ — 508

YES (502) → $N_{e,data,j}$ =min SET1 — 503

END

FIG.5

601
TFC

602

f( )

603
PARAMETERS

# FIG.6

FIG.7

EP 1 717 982 A2

800

801 802 810 811 803 804 812

Data1 → DECODER ← RATE DEMATCHER ← DEMUX ← DE-SPREADER ← DEMODU-LATOR ← RF

Data ← MAC ← Data2 → DECODER ← RATE DEMATCHER

805

PARAMETER DECIDER

SF

MF

TBS

807

TBS(806) → DECODER

808 809

DE-SPREADER ← DEMODU-LATOR

FIG.8